# EUROPEAN PATENT APPLICATION

(11) **EP 3 611 551 A1**
(43) Date of publication of application: **19.02.2020**
(21) Application number: 18783910.5
(22) Date of filing: 28.03.2018
(51) Int. Cl.: G02B 21/36, G01J 9/00, G02B 21/00

(54) **MICROSCOPE SYSTEM, MICROSCOPE, PROCESSING DEVICE, AND CAMERA FOR MICROSCOPES**

(30) Priority: 13.04.2017 JP 2017079985
(71) Applicant: Yokogawa Electric Corporation, Musashino-shi Tokyo 180-8750 (JP)
(72) Inventor: SANGU, Hiroyuki, Musashino-shi Tokyo 180-8750 (JP)
(74) Representative: Winter, Brandl, Fürniss, Hübner, Röss, Kaiser, Polte - Partnerschaft mbB
(86) International application number: PCT/JP2018/012893
(87) International publication number: WO 2018/190132

(57) **Abstract**

A microscope system includes a camera for a microscope, which is mounted on a microscope and which captures observation images formed by the microscope. The microscope system includes an imaging element on which the observation images are incident through an imaging lens of the microscope, an imaging device configured to capture, using the imaging element, images of the observation images that differ in an optical distance from the imaging lens to the imaging element, and that differ in a focal plane of the microscope, and an image processor configured to restore phase information of the observation images using the images captured by the imaging device and enhances contrast of the observation images.

## Description

### [Technical Field]

The present invention relates to a microscope system, a microscope, a processing device, and a camera for a microscope.

### [Background Art]

As a technique relating to capturing and processing a microscope image, a method of capturing a plurality of images that differ in a focal plane of a microscope and obtaining an image in which phase information is recovered by performing a Fourier transform or an image arithmetic operation on the images is disclosed (for example, Patent Literature 1). Patent Literature 1 discloses an example in which an image is captured while moving a focal plane by moving a stage for placing a sample of an observation target of a microscope using a motor or the like. In addition, as a microscope that generally observes an organism or the like, an inverted microscope that observes a sample of an observation target from below is known. In this inverted microscope, image capturing is performed by moving an objective lens up and down with respect to an observation target using a motor or the like.

In this manner, an image is generally observed by changing a relative distance between an observation target and an objective lens. It is possible to capture an image similar to a phase difference microscope image by recovering a phase from a plurality of images captured in this manner. In this method, since, unlike a phase difference microscope of the related art, image capturing is completed with a configuration which is simple in structure with no need to use a special illumination or an objective lens, and contrast is stronger than that of the phase difference microscope image, it is possible to capture an image appropriate for image analysis.

In addition, Patent Literature 2 discloses an example in which focusing is controlled by moving (advancing and retracting) an imaging element in addition to a lens. In addition, Patent Literature 3 discloses an example in which an image having a great depth of field is synthesized by moving (advancing and retracting) an imaging element and capturing a plurality of images.

### [Citation List]

### [Patent Literature]

[Patent Literature 1]
   PCT Japanese Translation Patent Publication No. 2002-529689
[Patent Literature 2]
   Japanese Unexamined Patent Application Publication No. H8-29668
[Patent Literature 3]
   Japanese Unexamined Patent Application Publication No. 2003-78802

### [Summary of Invention]

### [Technical Problem]

However, in the configuration disclosed in Patent Literature 1, since it is necessary to capture a microscope image while synchronizing the motor that drives a stage on which a sample of an observation target of a microscope is placed with the camera that captures the microscope image, the configuration is complicated. In addition, Patent Literature 2 discloses an example in which an imaging element is moved (advanced and retracted) in addition to a lens in order to control focusing, but it is not possible to capture an image while moving the focal plane. In addition, Patent Literature 3 discloses an example in which an image having a great depth of field is synthesized by capturing a plurality of images obtained by moving (advancing and retracting) an imaging element, but it is not possible to construct a phase-recovered image.

An aspect of the present invention was contrived in view of such circumstances, and provides a microscope system, a microscope, a processing device, and a camera for a microscope which make it possible to construct a phase-recovered image from microscope images that differ in a focal plane with a configuration which is simpler in structure than the related art.

### [Solution to Problem]

In order to solve the above problem, according to an aspect of the present invention, there is provided a microscope system may include a camera for a microscope, which is mounted on a microscope and which captures observation images formed by the microscope. The microscope system may include an imaging element on which the observation images are incident through an imaging lens of the microscope, an imaging device configured to capture, using the imaging element, images of the observation images that differ in an optical distance from the imaging lens to the imaging element, and that differ in a focal plane of the microscope, and an image processor configured to restore phase information of the observation images using the images captured by the imaging device and enhances contrast of the observation images.

In addition, according to an aspect of the present invention, the microscope system further includes a distance changer capable of changing an optical distance from the imaging lens to the imaging element, and the imaging device captures the plurality of observation images that differ in the optical distance using the imaging element in accordance with the optical distance changed by the distance changer.

In addition, according to an aspect of the present invention, in the microscope system, the distance changer changes the optical distance by moving the imaging element in an optical axis direction from the imaging lens to the imaging element.

In addition, according to an aspect of the present invention, in the microscope system, the distance changer changes the optical distance by changing an optical system provided between the imaging lens and the imaging element.

In addition, according to an aspect of the present invention, in the microscope system, an optical lens provided as the optical system between the imaging lens and the imaging element is capable of being moved in an optical axis direction, and the distance changer changes the optical distance by moving the optical lens in the optical axis direction.

In addition, according to an aspect of the present invention, in the microscope system, the distance changer changes the optical distance by inserting and removing an optical lens provided as the optical system between the imaging lens and the imaging element into and from the optical system.

In addition, according to an aspect of the present invention, in the microscope system, the camera for the microscope is provided to be movable in an optical axis direction from the imaging lens to the imaging element, and the distance changer changes the optical distance by relatively moving the camera for the microscope or the imaging lens in the optical axis direction.

In addition, according to an aspect of the present invention, the microscope system further includes a plurality of imaging elements on which the observation images are incident through the imaging lens, the plurality of the imaging elements are provided so that the optical distances are different from each other, and the imaging device simultaneously captures the observation images that differ in the optical distance using the plurality of the imaging elements. In addition, according to an aspect of the present invention, the microscope system further includes at least one beam splitter configured to cause the observation images to be incident on the plurality of the imaging elements.

In addition, according to an aspect of the present invention, there is provided a microscope may include a stage on which an observation target is placed, an objective lens, an imaging lens that forms an image of the observation target which is incident through the objective lens, an imaging element on which observation images formed by the imaging lens are incident, an imaging device configured to capture, using the imaging element, images of the observation images that differ in an optical distance from the imaging lens to the imaging element, and that differ in a focal plane, and an image processor configured to restore phase information of the observation images using the images captured by the imaging device and enhances contrast of the observation images.

In addition, according to an aspect of the present invention, there is provided a processing device that controls a camera for a microscope, which is mounted on a microscope and which captures observation images formed by the microscope. The processing device may include a distance change controller configured to perform control for changing an optical distance from an imaging lens of the microscope through the imaging lens to an imaging element on which observation images are incident, an imaging controller configured to perform, using the imaging element, control for capturing images of the observation images that differ in the optical distance, and that differ in a focal plane of the microscope in accordance with the optical distance changed by the distance change controller, and an image processor configured to restore phase information of the observation images using the images captured by the control of the imaging controller and enhances contrast of the observation images.

In addition, according to an aspect of the present invention, the processing device further includes a magnification corrector configured to correct magnification of at least some captured images among the images obtained by capturing the observation images that differ in the optical distance.

In addition, according to an aspect of the present invention, there is provided a camera for a microscope, which is mounted on a microscope and which captures observation images formed by the microscope. The camera may include an imaging element on which the observation images are incident through an imaging lens of the microscope, and an imaging device configured to capture, using the imaging element, images of the observation images that differ in an optical distance from the imaging lens to the imaging element, and that differ in a focal plane of the microscope.

In addition, according to an aspect of the present invention, the camera for the microscope further includes a distance changer capable of changing an optical distance from the imaging lens to the imaging element, and the imaging device captures the observation images that differ in the optical distance using the imaging element in accordance with the optical distance changed by the distance changer.

In addition, according to an aspect of the present invention, in the camera for the microscope, the distance changer changes the optical distance by moving the imaging element in an optical axis direction from the imaging lens to the imaging element.

In addition, according to an aspect of the present invention, in the camera for the microscope, the distance changer changes the optical distance by changing an optical system provided between the imaging lens and the imaging element.

In addition, according to an aspect of the present invention, in the camera for the microscope, an optical lens provided as the optical system between the imaging lens and the imaging element is capable of being moved in an optical axis direction, and the distance changer changes the optical distance by moving the optical lens in the optical axis direction.

In addition, according to an aspect of the present invention, in the camera for the microscope, the distance changer changes the optical distance by inserting and removing an optical lens provided as the optical system between the imaging lens and the imaging element into and from the optical system.

In addition, according to an aspect of the present invention, the camera for the microscope is provided to be movable in an optical axis direction from the imaging lens to the imaging element, and the distance changer changes the optical distance by relatively moving the camera for the microscope or the imaging lens in the optical axis direction.

In addition, according to an aspect of the present invention, the camera for the microscope further includes a plurality of the imaging elements on which the observation images are incident through the imaging lens, the plurality of imaging elements are provided so that the optical distances are different from each other, and the imaging device simultaneously captures the observation images that differ in the optical distance using the plurality of imaging elements.

### [Advantageous Effects of Invention]

According to the present invention, it is possible to construct a phase-recovered image from microscope images that differ in a focal plane with a configuration which is simpler in structure than the related art.

### [Brief Description of Drawings]

FIG. 1 is a diagram illustrating an example of a configuration of a microscope system according to a first embodiment.
FIG. 2 is a detailed diagram illustrating an example of a configuration of a camera for a microscope according to the first embodiment.
FIG. 3 is a flow chart illustrating an example of a microscope image capturing process according to the first embodiment.
FIG. 4 is a diagram illustrating an optical distance when the position of an imaging element according to the first embodiment is in an initial state.
FIG. 5 is a diagram illustrating an optical distance when the imaging element according to the first embodiment is moved in an optical axis direction (forward).
FIG. 6 is a diagram illustrating an optical distance when the imaging element according to the first embodiment is moved in an optical axis direction (backward).
FIG. 7 is a block diagram illustrating an example of a functional configuration of a processing device according to the first embodiment.
FIG. 8 is a diagram illustrating an example in which an optical distance according to a second embodiment is changed.
FIG. 9 is a diagram illustrating an example in which an optical distance according to a third embodiment is changed.
FIG. 10 is a diagram illustrating an example in which an optical distance according to a fourth embodiment is changed.
FIG. 11 is a diagram illustrating an example in which a plurality of observation images that differ in an optical distance according to a fifth embodiment are simultaneously captured.

### [Description of Embodiments]

Hereinafter, embodiments of the present invention will be described with reference to the accompanying drawings.

Meanwhile, in the drawings used in the description of the following embodiments, principle parts are mainly described in order to make the description easier to understand, and other descriptions are appropriately omitted. In addition, the principle parts may be enlarged, for convenience, and the dimension ratios and the like for respective components are not necessarily the same as those in reality. In addition, in the respective drawings, common components are denoted by the same reference numerals and signs, and thus the description thereof will not be given.

### [First embodiment]

First, a first embodiment of the present invention will be described.

### (Configuration of microscope system)

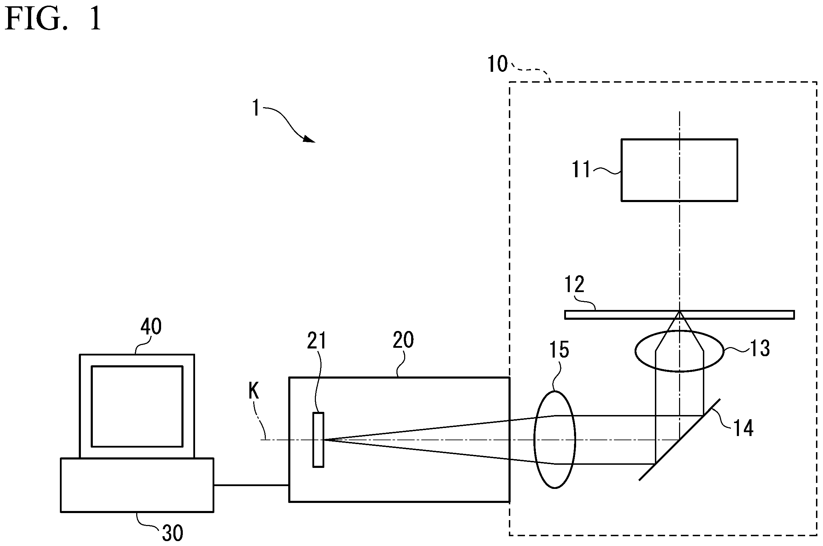

FIG. 1 is a diagram illustrating an example of a configuration of a microscope system 1 according to a first embodiment. The microscope system 1 shown in the drawing includes a microscope 10 which is a microscope body, a camera for a microscope 20 mounted on the microscope 10, a processing device 30 controlling the camera for the microscope 20, and a monitor 40 attached to the processing device 30.

The microscope 10 includes a transparent illumination 11, a sample stage 12, an objective lens 13, a folding mirror 14, and an imaging lens 15. The transparent illumination 11 irradiates the sample stage 12 with light for observation. A sample which is an observation target to be observed by this microscope 10 is placed on the sample stage 12. The objective lens 13 magnifies an image of the observation target placed on the sample stage 12. The folding mirror 14 guides parallel light of an image of the observation target magnified by the objective lens 13 to the imaging lens 15. The parallel light which is guided from the objective lens 13 through the folding mirror 14 is formed by the imaging lens 15. In the following description, the image of the observation target which is formed by the imaging lens 15 is also referred to as an observation image. Meanwhile, in this drawing, since the camera for a microscope 20 is not mounted for a person to observe the microscope 10, an ocular lens is not mounted on the rear stage of the imaging lens 15.

The camera for a microscope 20 is mounted on the microscope 10, and captures an observation image which is incident from the microscope 10. The camera for a microscope 20 shown in the drawing includes an imaging element 21 on which the observation image is incident through the imaging lens 15 of the microscope 10. For example, the observation image is formed on the imaging surface of the imaging element 21 by the imaging lens 15. The camera for a microscope 20 captures the observation images formed by the microscope 10 using the imaging element 21. Meanwhile, a dashed-dotted line indicated by a sign K in this drawing represents the optical axis of light which is incident on the imaging element 21 through the objective lens 13, the folding mirror 14, and the imaging lens 15, and the same is true of other drawings.

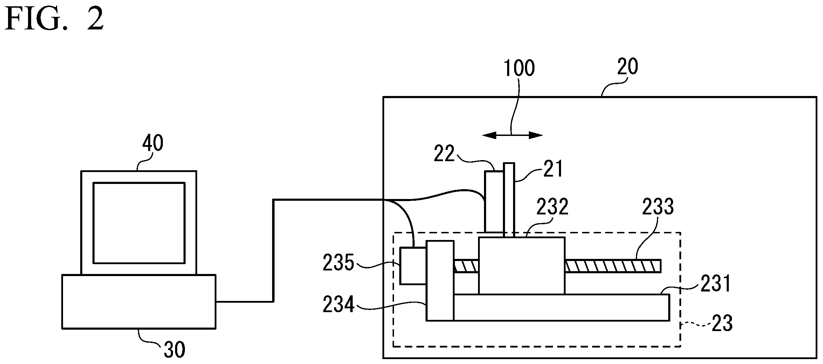

Next, the configuration of the camera for a microscope 20 will be described in detail with reference to FIG. 2. FIG. 2 is a detailed diagram illustrating an example of the configuration of the camera for a microscope 20 according to the first embodiment. The camera for a microscope 20 includes the imaging element 21, an imaging device 22 that captures the observation images formed by the microscope 10 using the imaging element 21, and a distance changer 23 capable of changing an optical distance from the imaging lens 15 to the imaging element 21.

The distance changer 23 changes the optical distance from the imaging lens 15 to the imaging element 21 by moving the imaging element 21 in an optical axis direction. Here, the optical axis direction is a direction along the optical axis of light which is incident on the imaging element 21 through the imaging lens 15 (that is, an optical axis direction from the imaging lens 15 to the imaging element 21). The optical axis direction includes both a direction in which the imaging element 21 approaches the imaging lens 15 and a direction in which the imaging element moves away from the imaging lens. For example, the distance changer 23 includes a linear guide 231, a stage portion 232, a ball screw 233, a fixed block 234, and a stepping motor 235. The imaging element 21 is fixed to the stage portion 232 on the linear guide 231, and can be translated in a direction indicated by an arrow 100 (the optical axis direction). The fixed block 234 is connected to the linear guide 231, and the stepping motor 235 is fixed to the fixed block 234. Further, the ball screw 233 is rotatably supported on the fixed block 234 by a bearing which is not shown. The ball screw 233 is connected to the stepping motor 235 by a coupling which is not shown. In addition, a ball nut which is not shown is disposed inside the stage portion 232, and is threadedly engaged with the ball screw 233. With such a configuration, the ball screw 233 is rotated by driving the stepping motor 235, and the imaging element 21 is translated in a direction indicated by the arrow 100 (the optical axis direction) together with the stage portion 232. In addition, the imaging device 22 that performs image capturing using the imaging element 21 and the stepping motor 235 are connected to the processing device 30.

The processing device 30 is a computer device which is used by a user, and a personal computer (PC), a tablet PC, a cellular phone such as a smartphone or a feature phone, a personal digital assistant (PDA), or the like can be applied.

For example, the processing device 30 moves the imaging element 21 in the optical axis direction by controlling the imaging device 22 and the stepping motor 235 of the camera for a microscope 20. For example, the processing device 30 controls the camera for a microscope 20 so as to capture a plurality of observation images that differ in the optical distance from the imaging lens 15 to the imaging element 21 (that is, that differ in a focal plane) by translating the imaging element 21 in the optical axis direction. In addition, the processing device 30 constructs (generates) a captured image (phase-recovered image), obtained by recovering (restoring) phase information, from a plurality of images that differ in the optical distance.

### (Operation of microscope image capturing process)

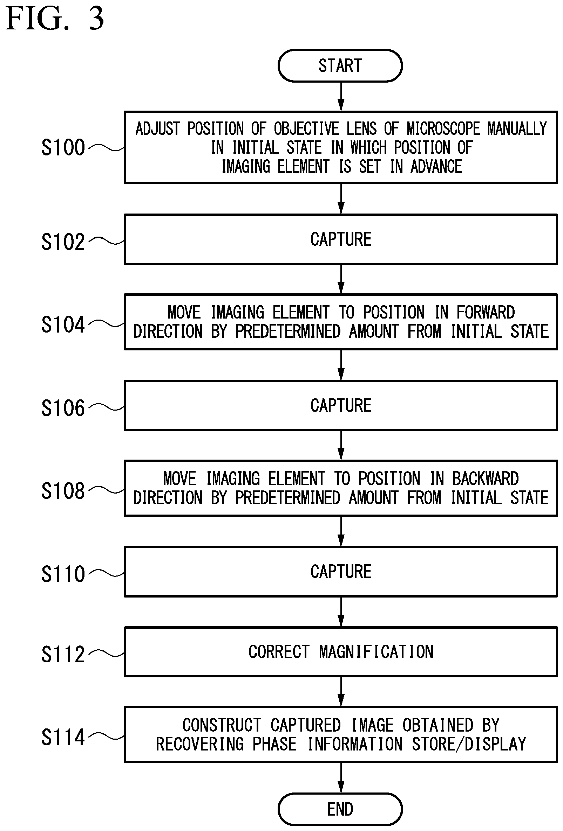

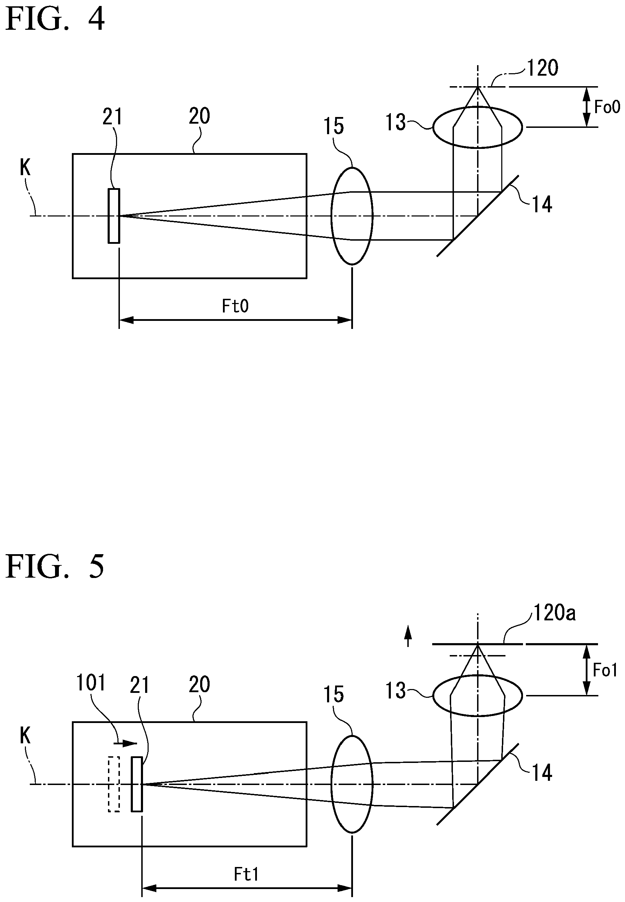

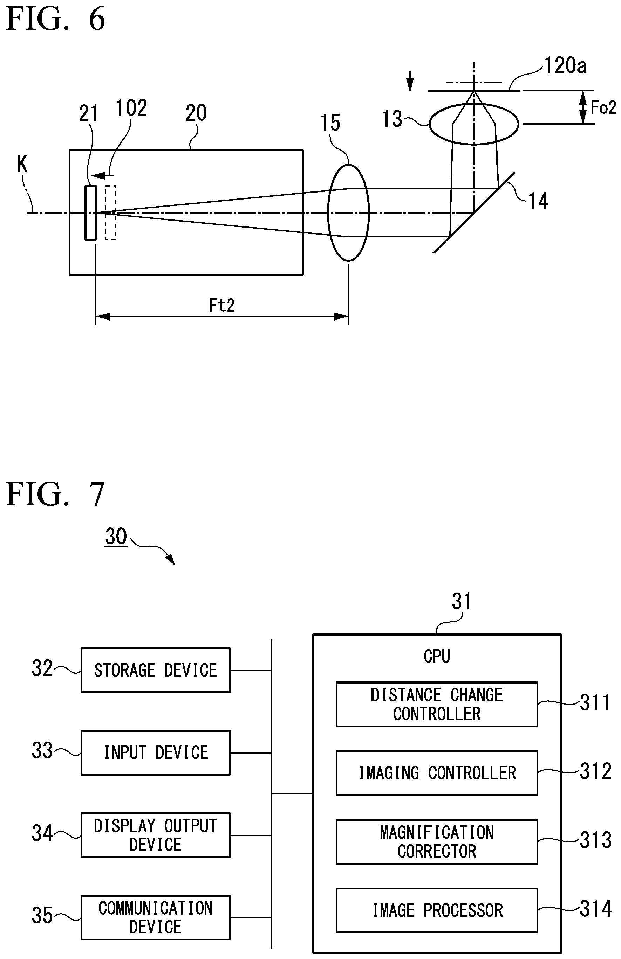

Next, reference will be made to FIGS. 3 to 6 to describe an operation of a microscope image capturing process of capturing a plurality of observation images that differ in the optical distance by the processing device 30 moving (translating) the imaging element 21 of the camera for a microscope 20 in the optical axis direction, and constructing the phase-recovered image. FIG. 3 is a flow chart illustrating an example of a microscope image capturing process according to the first embodiment. In addition, FIG. 4 is a diagram illustrating an optical distance when the position of the imaging element 21 is in an initial state. FIGS. 5 and 6 are diagrams illustrating optical distances when the imaging element 21 is moved in the optical axis direction.

Step S100: First, a sample placed on the sample stage 12 is illuminated with light from the transparent illumination 11. Here, the light that passes through the sample is incident on the objective lens 13, and is incident on the imaging element 21 of the camera for a microscope 20 through the imaging lens 15 by the folding mirror 14 changing its direction. Thereby, a magnified image is formed on the imaging element 21. In an initial state, the position of imaging element 21 is set in advance, and in a case where a sample is placed on the stage 7, the sample is adjusted so that it is generally located on the focal plane. Here, while capturing an image of the imaging element 21, an observer manually moves the position of the objective lens 13 of the microscope 10 and focuses on the imaging element. In this case, a distance from the principal point of the imaging lens 15 to the imaging element 21 is set to Ft0, a distance from the principal point of the objective lens 13 to the focal plane 120 is set to Fo0, and a magnification is set to Ft0/Fo0 (see FIG. 4).

Step S102: In this initial state, the processing device 30 causes the camera for a microscope 20 to capture the observation image formed by the microscope 10.

Step S104: Next, as shown in FIG. 5, the processing device 30 drives the stepping motor 235 so that the imaging element 21 is translated to a position in a forward direction (the direction of an arrow 101) from an initial state by a predetermined amount which is set in advance in accordance with the used objective lens 13. In this case, a distance from the principal point of the imaging lens 15 to the imaging element 21 is set to Ft1, and a distance from the principal point of the objective lens 13 to the focal plane 120a is set to Fo1. Thus, a magnification is set to Ft1/Fo1, and the magnification becomes slightly smaller than in the case of the initial state shown in FIG. 4. Meanwhile, in this case, the focus may be finely adjusted using the contrast of the observation image and the autofocus function of the camera for a microscope 20.

Step S106: In a state where this imaging element 21 is translated forward, the processing device 30 causes the camera for a microscope 20 to capture the observation image formed by the microscope 10.

Step S108: Next, as shown in FIG. 6, the processing device 30 drives the stepping motor 235 so that the imaging element 21 is translated to a position in a backward direction (the direction of an arrow 102) from an initial state by a predetermined amount which is set in advance in accordance with the used objective lens 13. In this case, a distance from the principal point of the imaging lens 15 to the imaging element 21 is set to Ft2, and a distance from the principal point of the objective lens 13 to the focal plane 120b is set to Fo2. Thus, a magnification is set to Ft2/Fo2, and the magnification becomes slightly larger than in the case of the initial state shown in FIG. 4 (see FIG. 6). Meanwhile, in this case, the focus may be finely adjusted using the contrast of the observation image and the autofocus function of the camera for a microscope 20.

Step S110: In a state where this imaging element 21 is translated backward, the processing device 30 causes the camera for a microscope 20 to capture the observation image formed by the microscope 10.

Step S112: Next, since images captured in steps S106 and S110 among images captured in steps S102, S106, and S110 become slightly different from the image captured in step S102 in magnification, the processing device 30 performs magnification correction thereof. For example, the processing device 30 performs correction of magnifying or reducing the images captured in steps S106 and S110 so as to have the same magnification as the image captured in step S102. Specifically, the processing device 30 magnifies the image captured in step S106 so as to have the same magnification as the image captured in step S102. In addition, the processing device 30 reduces the image captured in step S110 so as to have the same magnification as the image captured in step S102.

Step S114: Subsequently, the processing device 30 performs a Fourier transform process, an image arithmetic operation process, or an inverse Fourier transform process as described in Citation List on the respective image captured in steps S102, S106, and S110, and constructs a phase-recovered image obtained by recovering (restoring) the phase. The processing device 30 then stores the constructed phase-recovered image in a storage device, and displays the constructed imaged on the monitor 40. The storage device may be built into the processing device 30, or may be an external device which is connected to the processing device through a cable or the like. In addition, the storage device may be connected to the processing device 30 through the Internet.

Meanwhile, although an example in which focusing in an initial state is manually performed has been introduced in the above processing example, there is no limitation thereto. For example, the processing device 30 may drive the stepping motor 235, and obtain the initial position of the imaging element 21 at which the contrast of the image becomes maximum.

### (Configuration of processing device 30)

Next, the configuration of the processing device 30 will be described with reference to FIG. 7. FIG. 7 is a block diagram illustrating an example of a functional configuration of the processing device 30 according to the first embodiment. The processing device 30 shown in the drawing includes a central processing unit (CPU) 31, a storage device 32, an input device 33, a display output device 34, and a communication device 35. These components are communicably connected to each other through a bus. The CPU 31 executes various types of programs stored in the storage device 32, and controls each device of the processing device 30.

The storage device 32 includes, for example, a hard disk drive (HDD), a solid state drive (SSD), an electrically erasable programmable read-only memory (EEPROM), a read-only memory (ROM), a random access memory (RAM), or the like, and stores various types of information, images, programs and the like which are processed by the processing device 30. Meanwhile, the storage device 32 may be an external storage device connected by a digital input and output port such as a USB or the like without being built into the processing device 30.

The input device 33 is a keyboard, a mouse, a touch pad, a microphone to which various types of instructions are input by voice, or the like. Meanwhile, the input device 33 may be formed integrally with the display of the monitor 40 as a touch panel.

The display output device 34 outputs information to be displayed on the monitor 40. The communication device 35 is connected to the camera for a microscope 20 in a wired or wireless manner, and can transmit or receive various types of data to and from the camera for a microscope 20. For example, the communication device 35 transmits control information for controlling the camera for a microscope 20, or receives image data of an image captured by the camera for a microscope 20. In addition, the processing device 30 may include a speaker, a voice output terminal and the like which are not shown.

In addition, the processing device 30 includes a distance change controller 311, an imaging controller 312, a magnification corrector 313, and an image processor 314 as a functional configuration realized by the CPU 31 executing a control program stored in the storage device 32 (a program for controlling the camera for a microscope 20).

The distance change controller 311 performs control for changing an optical distance to the imaging element 21 on which the observation image is incident from the imaging lens 15 of the microscope 10 through the imaging lens 15. For example, the distance change controller 311 changes the optical distance from the imaging lens 15 to the imaging element 21 by driving the stepping motor 235 and moving (translating) the imaging element 21 in the optical axis direction.

The imaging controller 312 controls the imaging device 22 in accordance with the optical distance changed by the distance change controller 311, and captures a plurality of observation images that differ in the optical distance.

The magnification corrector 313 corrects the magnification of at least some captured images among a plurality of images obtained by capturing observation images that differ in the optical distance. For example, the magnification corrector 313 magnifies or reduces an image captured by moving (translating) the imaging element 21 forward in the optical axis direction from a position in an initial state and an image captured by moving (translating) the imaging element backward in the optical axis direction so as to have the same magnification as that of an image captured at a position in an initial state. Specifically, the magnification corrector 313 magnifies the image captured by moving (translating) the imaging element 21 forward in the optical axis direction from a position in an initial state so as to have the same magnification as the image captured at a position in an initial state. In addition, the magnification corrector 313 reduces the image captured by moving (translating) the imaging element backward in the optical axis direction so as to have the same magnification as the image captured at a position in an initial state.

The image processor 314 recovers (restores) phase information through image processing from a plurality of images obtained by capturing observation images that differ in an optical distance from the imaging lens 15 of the microscope 10 to the imaging element 21 (for example, images after correction performed by the magnification corrector 313), and constructs (generates) a captured image (a phase-recovered image) having enhanced contrast.

As described above, in the microscope system 1 according to the present embodiment, the camera for a microscope 20 is a camera, mounted on the microscope 10, which captures the observation images formed by the microscope 10, and includes the imaging element 21 on which the observation image is incident through the imaging lens 15 of the microscope 10 and the imaging device 22 that captures a plurality of observation images that differ in the optical distance from the imaging lens 15 to the imaging element 21 (that is, that differ in a focal plane) using the imaging element 21. For example, the camera for a microscope 20 includes the distance changer 23 capable of changing the optical distance from the imaging lens 15 to the imaging element 21, and the imaging device 22 captures a plurality of observation images that differ in an optical distance using the imaging element 21 in accordance with the optical distance changed by the distance changer 23. Specifically, the distance changer 23 changes the optical distance by moving (translating) the imaging element 21 in the optical axis directions from the imaging lens 15 to the imaging element 21 (both directions along an optical axis). In addition, the processing device 30 includes the image processor 314 that restores phase information of the observation image using a plurality of images captured by the imaging device 22 of the camera for a microscope 20 and enhances the contrast of the observation images.

In this manner, the camera for a microscope 20 can capture a plurality of observation images (microscope images) that differ in the focal plane using a general-purpose microscope 10 without driving the stage or the like of the microscope 10 by translating the imaging element 21 in optical axis directions. Thus, according to the present embodiment, since this camera for a microscope 20 has only to be mounted on, for example, a low-cost microscope for manual operation, it is possible to construct a phase-recovered image from the observation images (the microscope images) that differ in the focal plane with a configuration which is simpler in structure than the related art. In addition, an electric-powered microscope of the related art is generally high-priced, and thus there is a problem in that the formation of a system that fetches a microscope image by controlling an imaging camera while a signal for controlling this electric microscope is sent to the outside leads to an increase in the price of the system. However, in the present embodiment, since a phase-recovered image can be constructed from the observation images (the microscope images) that differ in the focal plane with a configuration which is simple in structure, it is possible to obtain a low-cost system.

In addition, the processing device 30 that controls the camera for a microscope 20 includes the distance change controller 311 that performs control for changing the optical distance from the imaging lens 15 of the microscope 10 to the imaging element 21 and the imaging controller 312 that performs control for capturing a plurality of observation images that differ in an optical distance using the imaging element 21 in accordance with the optical distance changed by the distance change controller 311. For example, the distance change controller 311 changes the optical distance by performing control for moving (translating) the imaging element 21 in the optical axis directions from the imaging lens 15 to the imaging element 21 (both directions along an optical axis).

In this manner, the processing device 30 can capture a plurality of observation images (microscope images) that differ in the focal plane without driving the stage or the like of the microscope 10 by changing an optical distance from the imaging lens 15 of the camera for a microscope 20 to the imaging element 21 (for example, by translating the imaging element 21 in optical axis directions). Thus, according to the present embodiment, it is possible to acquire observation images (microscope images) that differ in the focal plane using a general-purpose microscope 10 with only the camera for a microscope 20 used as a control target. Therefore, according to the present embodiment, it is possible to construct a phase-recovered image from the observation images (the microscope images) that differ in the focal plane with a configuration which is simpler in structure and lower in cost than the related art.

In addition, the processing device 30 includes the image processor 314 that restores phase information through image processing from a plurality of images obtained by capturing observation images that differ in the optical distance from the imaging lens 15 of the microscope 10 to the imaging element 21 and constructs a captured image having enhanced contrast.

Thereby, the processing device 30 can construct a phase-recovered image having contrast from the observation images (the microscope images) that differ in the focal plane with a configuration which is simpler in structure and lower in cost than the related art.

In addition, the processing device 30 includes the magnification corrector 315 that corrects the magnification of at least some captured images among a plurality of images obtained by capturing observation images that differ in the optical distance.

Thereby, the processing device 30 can suppress the influence of a change in magnification between captured images occurring due to a difference in focal plane, and thus a high-definition image is obtained.

### [Second embodiment]

Next, a second embodiment of the present invention will be described.

In the first embodiment, as a method of changing an optical distance from the imaging lens 15 to the imaging element 21, the imaging element 21 is moved (translated) in the optical axis direction. On the other hand, in the second embodiment, an optical distance from the imaging lens 15 to the imaging element 21 is changed by changing an optical system provided between the imaging lens 15 and the imaging element 21.

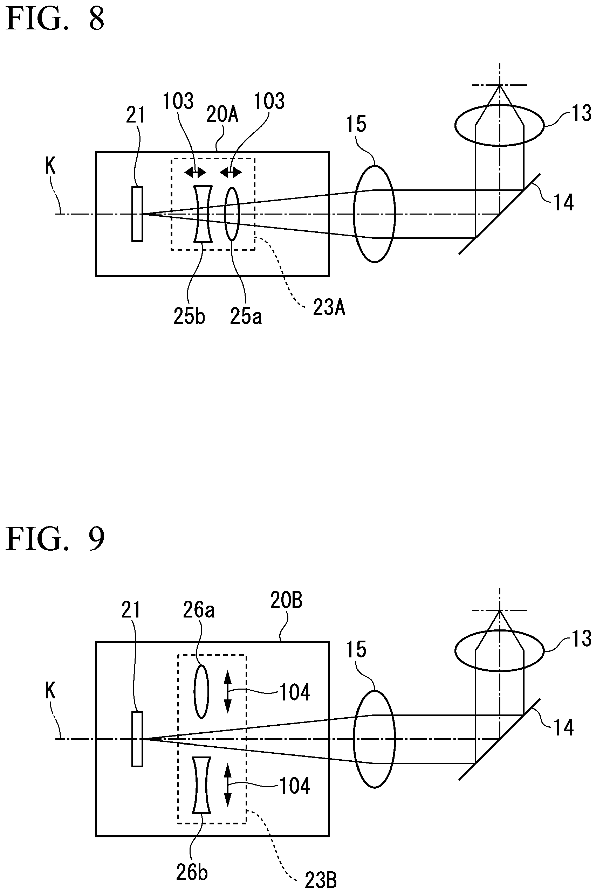

FIG. 8 is a diagram illustrating an example in which an optical distance from the imaging lens 15 to the imaging element 21 according to the second embodiment is changed. A camera for a microscope 20A shown in the drawing is different from the camera for a microscope 20 of the first embodiment, in that an optical system including variable power optical elements 25a and 25b that change a focal length is included between the imaging lens 15 and the imaging element 21, and other configurations are the same as each other.

For example, the camera for a microscope 20A includes a distance changer 23A capable of changing the optical distance from the imaging lens 15 to the imaging element 21 by moving the optical system (the variable power optical elements 25a and 25b) provided between the imaging lens 15 and the imaging element 21. For example, the distance changer 23A includes a stepping motor, a linear guide and the like (not shown) corresponding to each of the variable power optical elements 25a and 25b so as to be capable of moving the variable power optical elements in the optical axis direction (a direction of arrow 103 shown in the drawing).

The processing device 30 moves the variable power optical elements 25a and 25b independently in the optical axis direction by independently driving a stepping motor corresponding to each of the variable power optical elements 25a and 25b.

For example, the processing device 30 can change a focal plane for the observation image by translating each of the variable power optical elements 25a and 25b to any position in the optical axis direction.

In this manner, the camera for a microscope 20A according to the present embodiment is configured such that an optical lens (the variable power optical elements 25a and 25b) provided as the optical system between the imaging lens 15 and the imaging element 21 is capable of being moved (translated) in the optical axis direction, and changes the optical distance from the imaging lens 15 to the imaging element 21 by moving (translating) the optical lens in the optical axis direction.

Thereby, the camera for a microscope 20A can capture observation images that differ in the optical distance from the imaging lens 15 to the imaging element 21 (that is, that differ in a focal plane), similarly to the first embodiment, by translating the optical system (the variable power optical elements 25a and 25b) between the imaging lens 15 and the imaging element 21 in the optical axis direction. Thus, according to the present embodiment, since this camera for a microscope 20A has only to be mounted on, for example, a low-cost microscope for manual operation, it is possible to construct a phase-recovered image from the observation images (the microscope images) that differ in the focal plane with a configuration which is simpler in structure and lower in cost than the related art.

### [Third embodiment]

Next, a third embodiment of the present invention will be described.

In the present embodiment, the optical distance from the imaging lens 15 to the imaging element 21 is changed by changing an optical system provided between the imaging lens 15 and the imaging element 21 similarly to the second embodiment, but there is a difference in a method of changing an optical system.

FIG. 9 is a diagram illustrating an example in which an optical distance from the imaging lens 15 to the imaging element 21 according to the third embodiment is changed. A camera for a microscope 20B shown in the drawing includes an optical system including variable power optical elements 26a and 26b for changing a focal length between the imaging lens 15 and the imaging element 21, but is different from the camera for a microscope 20A of the second embodiment, in that these variable power optical elements can be inserted into and removed from the optical system. The wording "insertion and removal into and from the optical system" means that the variable power optical elements 26a and 26b are inserted in a range of light in which the observation image is incident on the imaging element 21 through the imaging lens 15 (a predetermined range centering on the optical axis), or the variable power optical elements 26a and 26b are moved out of the range of light (a predetermined range centering on the optical axis) (movement in a direction of arrow 104 shown in the drawing). The optical distances from the imaging lens 15 to the imaging element 21 are different from each other when the variable power optical element 26a is inserted, when the variable power optical element 26b is inserted, and when both the variable power optical elements are removed. For example, a distance changer 23B includes an actuator, a linear guide and the like (not shown) corresponding to each of the variable power optical elements 26a and 26b so as to be capable of inserting and removing the variable power optical elements into and from the optical system.

The processing device 30 inserts and removes the variable power optical elements 26a and 26b into and from the optical system by independently driving an actuator corresponding to each of the variable power optical elements 26a and 26b. That is, the processing device 30 can insert and remove each of the variable power optical elements 25a and 25b into and from the optical system, and change the focal plane for the observation image.

In this manner, the camera for a microscope 20B according to the present embodiment changes the optical distance from the imaging lens 15 to the imaging element 21 by inserting and removing the variable power optical elements 26a and 26b (an example of an optical lens) provided as the optical system between the imaging lens 15 and the imaging element 21 into and from the optical system.

Thereby, the camera for a microscope 20B can capture observation images that differ in the optical distance from the imaging lens 15 to the imaging element 21 (that is, that differ in a focal plane), similarly to the first and second embodiments, by inserting and removing the optical system (the variable power optical elements 26a and 26b) between the imaging lens 15 and the imaging element 21 into and from the optical system. Thus, according to the present embodiment, since this camera for a microscope 20B has only to be mounted on, for example, a low-cost microscope for manual operation, it is possible to construct a phase-recovered image from the observation images (the microscope images) that differ in the focal plane with a configuration which is simpler in structure and lower in cost than the related art.

### [Fourth embodiment]

Next, a fourth embodiment of the present invention will be described.

In the present embodiment, a description will be given of a configuration in which an optical distance from the imaging lens 15 to the imaging element 21 is changed by the camera for a microscope itself being moved in the optical axis direction.

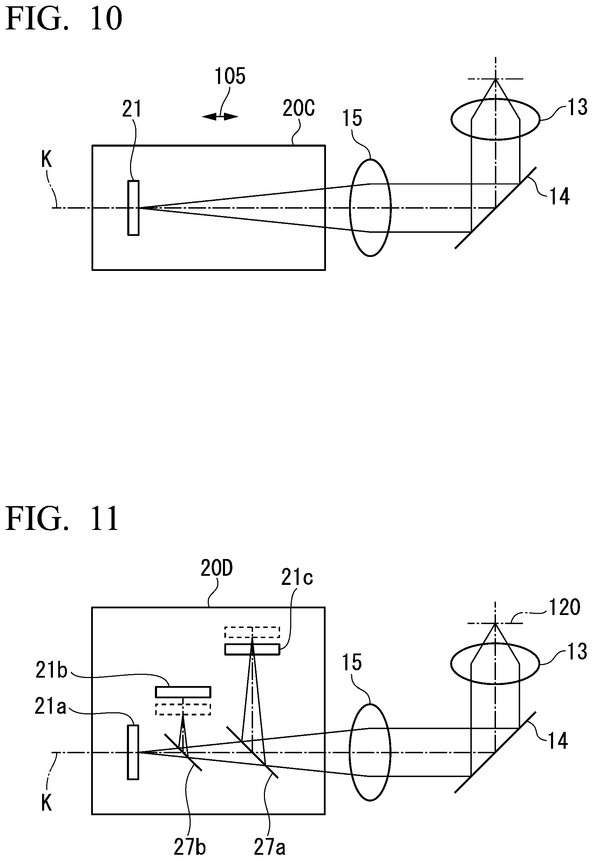

FIG. 10 is a diagram illustrating an example in which an optical distance from the imaging lens 15 to the imaging element 21 according to the fourth embodiment is changed. A camera for a microscope 20C shown in the drawing is provided to be capable of being moved (translated) in the optical axis directions (both directions along an optical axis) from the imaging lens 15 to the imaging element 21. For example, the processing device 30 moves (translates) the main body of the camera for a microscope 20C in the optical axis direction (a direction of arrow 105 shown in the drawing) relatively to the imaging lens 15 by driving an actuator which is not shown.

Meanwhile, the optical distance from the imaging lens 15 to the imaging element 21 may be changed by moving the imaging lens 15 in the optical axis direction relatively to the camera for a microscope 20C instead of moving the main body of the camera for a microscope 20C in the optical axis direction relatively to the imaging lens 15.

In this manner, according to the present embodiment, the optical distance from the imaging lens 15 to the imaging element 21 is changed by relatively translating the main body of the camera for a microscope 20C or the imaging lens 15 in the optical axis direction.

Thereby, the camera for a microscope 20C can capture observation images that differ in the optical distance from the imaging lens 15 to the imaging element 21 (that is, that differ in a focal plane) similarly to the first to third embodiments. Thus, according to the present embodiment, since this camera for a microscope 20C has only to be mounted on, for example, a low-cost microscope for manual operation, it is possible to construct a phase-recovered image from the observation images (the microscope images) that differ in the focal plane with a configuration which is simpler in structure and lower in cost than the related art.

### [Fifth embodiment]

Next, a fifth embodiment of the present invention will be described.

In the first to fourth embodiments, examples in which a plurality of observation images that differ in an optical distance (that is, that differ in a focal plane) are captured while changing the optical distances from the imaging lens 15 to the imaging element 21 have been described. On the other hand, in the present embodiment, an example in which observation images that differ in an optical distance are simultaneously captured using a plurality of imaging element 21 will be described.

FIG. 11 is a diagram illustrating an example in which a plurality of observation images that differ in an optical distance according to the fifth embodiment are simultaneously captured. A camera for a microscope 20D shown in the drawing includes three imaging elements 21a, 21b, and 21c and beam splitters 27a and 27b. A child optical path is branched by the beam splitters 27a and 27b. The beam splitters 27a and 27b are, for example, pellicle beam splitters, are constituted by a thin cellulose film or the like, and have a feature of not generating a ghost image which is generated in an optical element having a normal thickness.

The beam splitters 27a and 27b are installed on an optical axis from the imaging lens 15 to the imaging element 21a in order of the beam splitters 27a and 27b. The beam splitter 27a reflects 1/3 of light which is incident from the imaging lens 15 upward (in a direction in which the imaging element 21c is installed) in FIG. 11, and transmits the remaining light leftward (in a direction in which the beam splitter 27b and the imaging element 21a are installed). The beam splitter 27b is installed between the beam splitter 27a and the imaging element 21a, reflects 50% of light transmitted through the beam splitter 27a upward (in a direction in which the imaging element 21b is installed), and transmits the remaining 50% of the light leftward (in a direction in which the imaging element 21a is installed).

In addition, the imaging element 21c is disposed at a position more distant from the imaging lens 15 than the imaging element 21a, and the imaging element 21b is disposed at a position closer to the imaging lens 15 than the imaging element 21a. That is, in the present embodiment, observation images that differ in the optical distance from the imaging lens 15 to the imaging element 21 (that is, that differ in a focal plane) can be simultaneously captured using the three imaging elements 21a, 21b, and 21c.

In this manner, the camera for a microscope 20D according to the present embodiment includes a plurality of imaging elements 21a, 21b, and 21c on which the observation image is incident through the imaging lens 15. In addition, the camera for a microscope 20D includes a plurality of beam splitters 27a and 27b that cause the observation image to be incident on the plurality of imaging elements 21a, 21b, and 21c. The plurality of imaging elements 21a, 21b, and 21c are provided so that the optical distances from the imaging lens 15 to the imaging element 21 are different from each other. The imaging device 22 of the camera for a microscope 20D simultaneously captures observation images that differ in an optical distance using the plurality of imaging elements 21a, 21b, and 21c.

Thereby, in the present embodiment, there is an advantage in that observation images that differ in an optical distance (that is, that differ in a focal plane) can be simultaneously captured without performing image capturing in a time-series manner while changing the optical distance unlike the first to fourth embodiments. For example, in the present embodiment, it is possible to shorten a time relating to imaging. In addition, in the present embodiment, since a configuration in which the imaging element, the optical system, the main body of the camera for a microscope, or the like is moved is not required, it is possible to make a configuration simple, and to reduce a failure or a load of accuracy management.

### [Modification example]

Meanwhile, in the embodiment, an example in which the processing device 30 constructs a phase-recovered image having phase information restored from observation images that differ in an optical distance (that is, that differ in a focal plane) has been described, but this process may be performed by the cameras for a microscope 20, 20A, 20B, 20C, and 20D (for example, the imaging device 22). In this case, the camera for a microscopes 20, 20A, 20B, 20C, and 20D (for example, the imaging device 22) can enhance the contrast of the observation images by constructing the phase-recovered image.

In addition, the camera for a microscopes 20, 20A, 20B, 20C, and 20D may be configured as a phase difference microscope formed integrally with the microscope 10. This phase difference microscope includes, for example, at least the sample stage 12 on which an observation target is placed, the objective lens 13, the imaging lens 15 that forms an image of an observation target which is incident through the objective lens 13, the imaging element 21 on which the observation image formed by the imaging lens 15 is incident, and the imaging device 22 that captures a plurality of observation images that differ in the optical distance from the imaging lens 15 to the imaging element 21 using the imaging element 21. As means for capturing a plurality of observation images that differ in the optical distance, any of the first to fifth embodiments can be applied.

Meanwhile, some or all of functions of each device included in the processing device 30 in the above-described embodiments may be realized by a computer. In that case, programs for realizing the above-described functions are recorded in a computer readable recording medium, and thus the above-described functions may be realized by causing a computer system to read and execute the programs recorded in this recording medium. Meanwhile, the term "computer system" referred to here is a computer system built into the processing device 30, and is assumed to include an OS or hardware such as peripheral devices.

In addition, the "computer system" is also assumed to include a homepage providing environment (or a display environment) in a case where a WWW system is used.

In addition, the term "computer readable recording medium" refers to a flexible disk, a magneto-optic disc, a ROM, a portable medium such as a CD-ROM, and a storage device such as a hard disk built into the computer system. Further, the "computer readable recording medium" may include recording mediums that dynamically hold a program during a short period of time like networks such as the Internet or communication lines when a program is transmitted through communication lines such as a telephone line, and recording mediums that hold a program for a certain period of time like a volatile memory inside a computer system serving as a server or a client in that case. In addition, the above-mentioned program may be a program which is used for realizing a portion of the aforementioned functions, and may be a program which is capable of realizing the aforementioned functions by a combination of programs previously recorded in the computer system.

In addition, a portion or of the entirety of the processing device 30 in the above-described embodiments may be realized by an integrated circuit such as a large scale integration (LSI). Each functional block of the processing device 30 may be individually formed as a processor, or some or all of the functional blocks may be integrated and be formed as processors. In addition, a method of forming an integrated circuit may be realized using a dedicated circuit or a general-purpose processor without being limited to an LSI. In addition, in a case where an integrated circuit forming technique for replacement with an LSI appears with the development of semiconductor technology, an integrated circuit based on the technique may be used.

In this specification, terms representing directions such as "front, rear, upper, lower, right, left, vertical, horizontal, longitudinal, transverse, row, and column" refer to such directions in a device of the present invention. Therefore, these terms in the specification of the present invention should be construed relatively in a device of the present invention.

A term such as "configured" is configured in order to execute functions of the present invention, or is used in order to represent a configuration, an element, or a portion of a device.

Further, the wording represented as "means plus function" in the claims should include every structure capable of being used in order to execute functions included in the present invention.

A term such as "unit" is used for representing a portion of software programmed in order to execute a component, a unit, hardware, or a desired function. A typical example of hardware is a device or a circuit, but is not limited thereto.

Hereinbefore, although preferred examples of the present invention have been described, the present invention is not limited to the examples. Additions, omissions, substitutions, and other changes of components can be made without departing from the spirit or scope of the present invention. The present invention is not limited by the above description, but is limited by only the appended claims.

### [Reference Signs List]

1 Microscope system
10 Microscope
20, 20A, 20B, 20C, 20D Camera for microscope
11 Transparent illumination
12 Sample stage
13 Objective lens
14 Folding mirror
15 Imaging lens
21 Imaging element
22 Imaging device
23, 23A, 23B Distance changer
30 Processing device
31 CPU
32 Storage device
33 Input device
34 Display output device
40 Monitor
231 Linear guide
232 Stage portion
233 Ball screw
234 Fixed block
235 Stepping motor
311 Distance change controller
312 Imaging controller
313 Magnification corrector
314 Image processor

## Claims

1. A microscope system including a camera for a microscope, which is mounted on a microscope and which captures observation images formed by the microscope, the microscope system comprising:
an imaging element on which the observation images are incident through an imaging lens of the microscope;
an imaging device configured to capture, using the imaging element, images of the observation images that differ in an optical distance from the imaging lens to the imaging element, and that differ in a focal plane of the microscope; and
an image processor configured to restore phase information of the observation images using the images captured by the imaging device and enhances contrast of the observation images.

2. The microscope system according to claim 1, further comprising:
a distance changer capable of changing an optical distance from the imaging lens to the imaging element,
wherein the imaging device captures the observation images that differ in the optical distance using the imaging element in accordance with the optical distance changed by the distance changer.

3. The microscope system according to claim 2,
wherein the distance changer changes the optical distance by moving the imaging element in an optical axis direction from the imaging lens to the imaging element.

4. The microscope system according to claim 2,
wherein the distance changer changes the optical distance by changing an optical system provided between the imaging lens and the imaging element.

5. The microscope system according to claim 4,
wherein an optical lens provided as the optical system between the imaging lens and the imaging element is capable of being moved in an optical axis direction, and the distance changer changes the optical distance by moving the optical lens in the optical axis direction.

6. The microscope system according to claim 4,
wherein the distance changer changes the optical distance by inserting and removing an optical lens provided as the optical system between the imaging lens and the imaging element into and from the optical system.

7. The microscope system according to claim 2,
wherein the camera for the microscope is provided to be movable in an optical axis direction from the imaging lens to the imaging element, and
wherein the distance changer changes the optical distance by relatively moving the camera for the microscope or the imaging lens in the optical axis direction.

8. The microscope system according to claim 1, further comprising:
a plurality of imaging elements on which the observation images are incident through the imaging lens,
wherein the plurality of the imaging elements are provided so that the optical distances are different from each other, and
wherein the imaging device simultaneously captures the observation images that differ in the optical distance using the plurality of the imaging elements.

9. The microscope system according to claim 8, further comprising:
at least one beam splitter configured to cause the observation images to be incident on the plurality of the imaging elements.

10. A microscope comprising:
a stage on which an observation target is placed;
an objective lens;
an imaging lens that forms an image of the observation target which is incident through the objective lens;
an imaging element on which observation images formed by the imaging lens are incident;
an imaging device configured to capture, using the imaging element, images of the observation images that differ in an optical distance from the imaging lens to the imaging element, and that differ in a focal plane; and
an image processor configured to restore phase information of the observation images using the images captured by the imaging device and enhances contrast of the observation images.

11. A processing device that controls a camera for a microscope, which is mounted on a microscope and which captures observation images formed by the microscope, the processing device comprising:
a distance change controller configured to perform control for changing an optical distance from an imaging lens of the microscope through the imaging lens to an imaging element on which observation images are incident;
an imaging controller configured to perform, using the imaging element, control for capturing images of the observation images that differ in the optical distance, and that differ in a focal plane of the microscope in accordance with the optical distance changed by the distance change controller; and
an image processor configured to restore phase information of the observation images using the images captured by the control of the imaging controller and enhances contrast of the observation images.

12. The processing device according to claim 11, further comprising:
a magnification corrector configured to correct magnification of at least some captured images among the images obtained by capturing the observation images that differ in the optical distance.

13. A camera for the microscope, which is mounted on a microscope and which captures observation images formed by the microscope, the camera comprising:
an imaging element on which the observation images are incident through an imaging lens of the microscope; and
an imaging device configured to capture, using the imaging element, images of the observation images that differ in an optical distance from the imaging lens to the imaging element, and that differ in a focal plane of the microscope.

14. The camera for the microscope according to claim 13, further comprising:
a distance changer capable of changing an optical distance from the imaging lens to the imaging element,
wherein the imaging device captures the observation images that differ in the optical distance using the imaging element in accordance with the optical distance changed by the distance changer.

15. The camera for the microscope according to claim 14,
wherein the distance changer changes the optical distance by moving the imaging element in an optical axis direction from the imaging lens to the imaging element.

16. The camera for the microscope according to claim 14,
wherein the distance changer changes the optical distance by changing an optical system provided between the imaging lens and the imaging element.

17. The camera for the microscope according to claim 16,
wherein an optical lens provided as the optical system between the imaging lens and the imaging element is capable of being moved in an optical axis direction, and the distance changer changes the optical distance by moving the optical lens in the optical axis direction.

18. The camera for the microscope according to claim 16,
wherein the distance changer changes the optical distance by inserting and removing an optical lens provided as the optical system between the imaging lens and the imaging element into and from the optical system.

19. The camera for the microscope according to claim 14,
wherein the camera for the microscope is provided to be movable in an optical axis direction from the imaging lens to the imaging element, and
wherein the distance changer changes the optical distance by relatively moving the camera for the microscope or the imaging lens in the optical axis direction.

20. The camera for the microscope according to claim 13, further comprising:
a plurality of the imaging elements on which the observation images are incident through the imaging lens,
wherein the plurality of imaging elements are provided so that the optical distances are different from each other, and
wherein the imaging device simultaneously captures the observation images that differ in the optical distance using the plurality of imaging elements.
